# FASCICULE DE BREVET EUROPEEN

(11) **EP 1 773 649 B1**
(45) Date de publication et mention de la délivrance du brevet: **15.12.2010**
(21) Numéro de dépôt: 05769949.8
(22) Date de dépôt: 16.06.2005
(51) Int. Cl.: B62D 65/02, B62D 21/11, F16B 19/02

(54) **PIECE POUR LE POSITIONNEMENT D'UN BERCEAU SUR UNE CAISSE DE VEHICULE AUTOMOBILE, BERCEAU ET VEHICULE CORRESPONDANTS**
BAUELEMENT ZUR POSITIONIERUNG EINES TRÄGERS AUF DER AUSSENHAUT EINES FAHRZEUGES SOWIE TRÄGER UND FAHRZEUG DAFÜR
PART FOR POSITIONING A CRADLE ON A MOTOR VEHICLE BODY SHELL, CORRESPONDING CRADLE AND VEHICLE

(30) Priorité: 30.06.2004 FR 0407277
(43) Date de publication de la demande: 18.04.2007
(73) Titulaire: Auto Chassis International SNC, 72086 Le Mans Cédex 9 (FR)
(72) Inventeur: CHABROL, Thierry, F-78150 Le Chesnay (FR)
(74) Mandataire: Religieux, Vincent
(86) Numéro de dépôt international: PCT/EP2005/052786
(87) Numéro de publication internationale: WO 2006/010670

(56) Documents cités:
- DE-A1- 10 222 008
- FR-A1- 2 767 750
- PATENT ABSTRACTS OF JAPAN vol. 016, no. 561 (M-1341), 3 décembre 1992 (1992-12-03) & JP 04 215565 A (TOYOTA MOTOR CORP), 6 août 1992 (1992-08-06)

## Description

Le domaine de l'invention est celui de l'industrie automobile. Plus précisément, l'invention concerne les berceaux supportant les moteurs de véhicules automobiles ou les trains arrières.

Selon une technique courante, les berceaux de moteur comprennent deux coquilles réalisées en tôle emboutie et assemblées entre elles, par exemple par soudage.

L'une des fonctions de ces berceaux est de supporter les efforts engendrés par le couple moteur lors de phases d'accélération ou de décélération du véhicule.

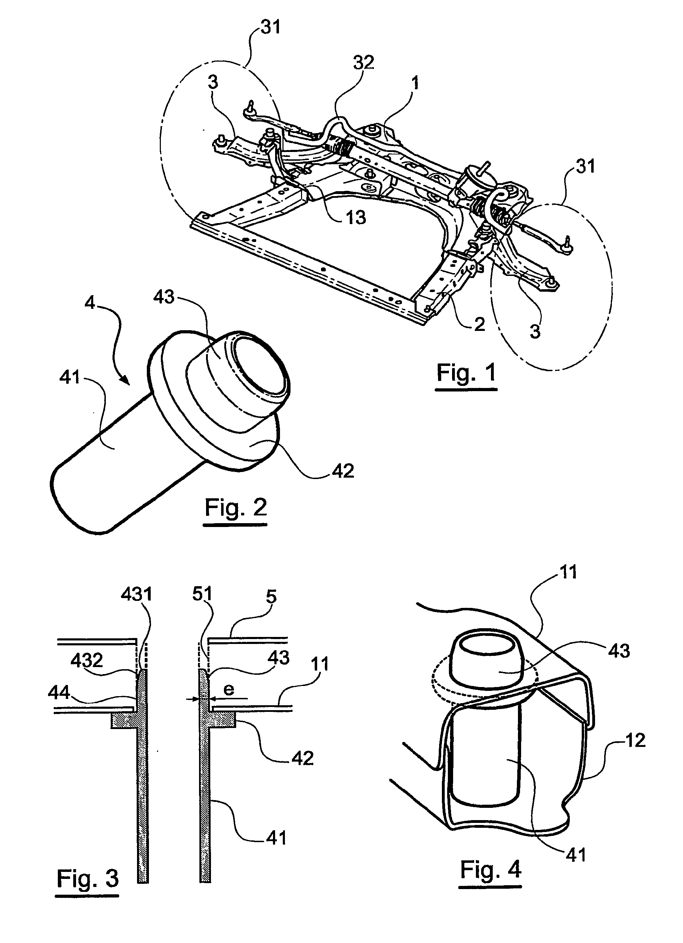

On rappelle, en référence à la figure 1, qu'un tel berceau 1, autrement appelé « mini berceau » par l'homme du métier, est solidarisé à la caisse du véhicule en partie arrière et, en partie avant, à un absorbeur de chocs 2 ou « add-on » fixé sur des platines 13 du berceau.

En outre, un tel berceau est couplé à des bras inférieurs 3 supports de roues ou portant des moyens supports de roues 31 (représentés symboliquement), une barre anti-dévers 32 reliant ces bras et étant maintenue sur le berceau.

La solidarisation du berceau à la caisse du véhicule s'effectue sur une chaîne de montage de la manière suivante.

La caisse assemblée et peinte arrive sur la ligne de montage, fixée sur une « balancelle « , située en hauteur par rapport au sol.

Parallèlement, le berceau est pré-positionné par un opérateur sur une platine dite TMA (platine de montage automatique), mobile essentiellement verticalement (les possibilités de déplacements de ces platines dans le plan horizontal sont limitées à quelques millimètres).

La balancelle qui soutient la caisse avance alors pour se positionner au-dessus de la platine. Celle-ci, qui supporte également tous les éléments montés sur la caisse (trains roulants, moteur, échappement, tuyauteries...), monte verticalement pour faire accoster tous les éléments avec la caisse.

Pour assurer son positionnement sur la caisse, le berceau est équipé de moyens de recentrage qui permettent de compenser les éventuels défauts géométriques entre la caisse et les fixations du berceau, ceci en agissant sur la position de la platine dans le plan horizontal.

Le berceau est ensuite vissé sur la caisse, des écrous ayant été soudés sur la caisse préalablement à la phase de montage.

Actuellement, les moyens de recentrage mentionnés précédemment sont constitués par une pièce sous forme d'entretoise présentant les caractéristiques définies dans le préambule de la revendication 1 et qui est soit solidaire du berceau, soit partie intégrante de l'articulation élastique de filtrage.

Une extrémité de cette entretoise s'engage dans un évidement de la caisse, cette extrémité présentant une forme conique destinée à assurer le centrage de l'entretoise par rapport à l'évidement de la caisse.

L'entretoise présente donc une forme spécifique permettant son centrage sur le véhicule en se logeant dans la caisse. En d'autres termes, la forme spécifique de l'entretoise a pour fonction d'exercer un rattrapage du désaxage éventuel entre le berceau et la caisse.

Traditionnellement, la fonction de centrage de l'entretoise est réalisée à l'aide d'une forme conique, ce cône présentant l'avantage de finir en pointe, ce qui réduit au maximum les risques que le cône vienne en appui sous la caisse au moment du déplacement vertical de la platine, ce qui entraînerait le soulèvement de la caisse plutôt que l'engagement du cône dans l'orifice correspondant de celle-ci. Ainsi, compte tenu du faible désaxage entre le berceau et la caisse qu'il faut généralement rattraper, la pointe du cône est amenée, au pire, en limite d'orifice (à l'intérieur de celui-ci) et la surface du cône forme une surface de glissement pour la caisse au fur et à mesure de l'engagement du cône dans l'orifice de la caisse.

Or, que ce soit à partir d'un tube ou d'un tronçon cylindrique plein, un tel cône est réalisé par usinage, la pièce ayant au préalable été généralement façonnée par forgeage, notamment pour la réalisation d'une collerette périphérique destinée à venir en appui contre la paroi interne d'une des coquilles du berceau.

Cette étape d'usinage du cône entraîne plusieurs inconvénients.

Tout d'abord, lorsque cette étape de fabrication fait suite à une étape de forgeage, il est nécessaire de stocker temporairement les pièces entre chaque étape de process puis de les faire transiter entre chaque poste, ce qui tend à alourdir les aspects logistiques liés à la fabrication de ces pièces.

Par ailleurs, une étape d'usinage, et en particulier une étape d'usinage d'un cône, augmente sensiblement le coût de la pièce, ce qui n'est évidemment pas souhaitable.

L'invention a donc notamment pour objectif de pallier les inconvénients de l'art antérieur.

Plus précisément, l'invention a pour objectif de proposer une pièce de positionnement d'un berceau par rapport à la caisse d'un véhicule qui permette d'envisager des gains logistiques entre le début et la fin de la fabrication de la pièce.

L'invention a également pour objectif de fournir une telle pièce de positionnement qui puisse être obtenue de façon moins coûteuse que les pièces de positionnement traditionnelles.

L'invention a aussi pour objectif de fournir une telle pièce de positionnement qui soit simple de conception et facile à mettre en oeuvre ;

Ces objectifs, ainsi que d'autres qui apparaîtront par la suite, sont atteints grâce à l'invention qui a pour objet une pièce de positionnement destinée à être portée par un berceau et à être engagée dans un évidement d'une caisse de véhicule automobile, du type présentant un corps formant entretoise entre deux coquilles dudit berceau, ledit corps présentant au moins un élément périphérique formant une surface d'appui avec une paroi d'une coquille du berceau destinée à prendre place au voisinage de ladite caisse, ladite pièce de positionnement comprenant une portion à section décroissante à son extrémité destinée à être engagée dans ledit évidement de ladite caisse, caractérisée en ce que ladite portion présente, selon une coupe longitudinale, une forme galbée susceptible d'être réalisée par fluage de matière, ledit élément périphérique étant également obtenue par fluage de matière, ladite forme galbée étant définie, en coupe longitudinale, par au moins deux arcs de cercle, l'un dit proximal au voisinage de ladite extrémité destinée à être engagée dans ledit évidement de ladite caisse, l'autre dit distal dans le prolongement dudit arc proximal et s'étendant vers ledit élément périphérique

De cette façon, une pièce de positionnement selon l'invention peut être façonnée en recourant à une seule et même technique de fabrication consistant à procéder par fluage de matière, par exemple par forgeage. Il n'est donc pas nécessaire d'organiser la logistique des pièces entre les postes de forgeage et d'usinage comme cela était le cas dans l'art antérieur.

En outre, on supprime grâce à l'invention l'étape d'usinage de l'art antérieur qui constituait une partie importante du coût de fabrication des pièces.

On peut donc envisager des gains notables au niveau des coûts de fabrication.

Selon une solution avantageuse, le rayon de courbure dudit arc distal est compris entre 75 % et 100 % du diamètre le plus grand de ladite portion.

Selon un mode de réalisation préféré, ladite forme galbée est définie, en coupe longitudinale, par au moins deux arcs de cercle, l'un dit proximal au voisinage de ladite extrémité destinée à être engagée dans ledit évidement de ladite caisse, l'autre dit distal dans le prolongement dudit arc proximal et s'étendant vers ledit élément périphérique, ledit arc proximal présentant un rayon de courbure compris entre environ 1 mm et environ 4 mm, ledit arc distal (432) présentant un rayon de courbure compris entre environ 15 mm et environ 25 mm..

On comprend que l'on cherche à obtenir une forme galbée composée de deux arcs ayant chacun une fonction propre. Les arcs sont « marqués » de leur fonction en prévoyant un rapport de l'ordre de 20 entre le rayon de courbure de l'arc proximal et celui de l'arc distal.

Ainsi, la forme galbée est répartie en deux portions : l'une essentiellement prévue pour faciliter le remplissage de l'outillage lors du fluage de matière, et l'autre essentiellement en vue de constituer une surface de glissement, éventuellement très pentue.

Une telle forme galbée présente en effet un compromis très satisfaisant entre sa capacité à être obtenue par forgeage (ou autre technique de fluage de matière) et son aptitude à favoriser le glissement de la caisse sur la pièce de positionnement.

En effet, une forme très pentue favorise énormément le glissement mais devient difficile, voire impossible, à obtenir par fluage de matière (une forme conique selon l'art antérieur ne peut être obtenue par forgeage, la matière ne parvenant pas à remplir l'outillage), tandis qu'une forme trop écrasée s'obtient très facilement par forgeage mais tend à constituer une surface d'appui (pouvant soulever la caisse) plutôt qu'une surface de glissement.

Dans ce cas, ledit arc proximal présente préférentiellement un rayon de courbure d'environ 1 mm, ledit arc distal présentant un rayon de courbure d'environ 20 mm.

Avantageusement, la pièce de positionnement est réalisée en acier.

Selon un mode de réalisation particulier, ladite portion se prolonge, en direction dudit élément périphérique par une partie cylindrique présentant une épaisseur d'environ 7 mm.

Une telle épaisseur permet de constituer une quantité matière suffisamment conséquente pour effectuer l'opération de fluage, tout en limitant le poids de la pièce.

Selon une variante avantageuse, ledit corps formant entretoise est inséré dans une douille, un matériau élastique étant prévu entre ledit corps et ladite douille de façon que ladite pièce forme un plot de filtration.

L'invention concerne également un berceau comprenant au moins deux coquilles entres lesquelles s'étend au moins partiellement une pièce de positionnement telle que définie dans la revendication 1.

L'invention concerne aussi un véhicule automobile équipé d'une berceau comprenant aux moins deux coquilles entre lesquelles s'étend au moins partiellement une pièce de positionnement telle que définie dans la revendication 1

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une vue en perspective d'un berceau de véhicule automobile dans son environnement immédiat ;
- les figures 2 et 3 sont des vues respectivement en perspective et en coupe longitudinale d'une pièce de positionnement selon l'invention ;
- la figure 4 est une vue en perspective d'une pièce de positionnement selon l'invention, montée entre les coquilles d'un berceau de véhicule automobile ;
- la figure 5 est une vue de détail d'une pièce de positionnement selon l'invention.

Tel que déjà mentionné précédemment, le principe de l'invention réside dans le fait concevoir une pièce de positionnement d'un berceau par rapport à la caisse d'un véhicule de façon que cette pièce puisse être réalisée par une technique de fluage de matière, notamment en ce qui concerne la forme galbée de son extrémité destinée à être engagée dans un orifice de la caisse du véhicule.

Ceci est illustré par les figures 2 à 4 qui montrent une pièce de positionnement 4 présentant un corps 41 destiné à former entretoise entre deux coquilles 11,12 d'un berceau de véhicule automobile, ce corps 41 présentant un élément périphérique 42 constituant une surface d'appui destinée à être plaquée contre la paroi interne de la coquille supérieure 11 ( c'est à dire la coquille placée au voisinage de la caisse une fois le berceau monté).

Selon le principe de l'invention, l'extrémité de la pièce de positionnement 4 destinée à être engagée dans la caisse présente une forme galbée 43 susceptible d'être réalisée par fluage de matière, l'élément périphérique 42 étant également réalisé par fluage de matière.

Ceci apparaît clairement sur la figure 3 qui montre une pièce de positionnement dont un élément périphérique 42 vient en appui sur une coquille 11 du berceau et dont l'extrémité galbée 43 pénètre un orifice 51 de la caisse 5.

On comprend donc que, en dehors de l'opération de découpe initiale de la pièce à une longueur déterminée, la pièce de positionnement selon l'invention est façonnée intégralement par une technique de fluage de matière, et en l'occurrence par forgeage.

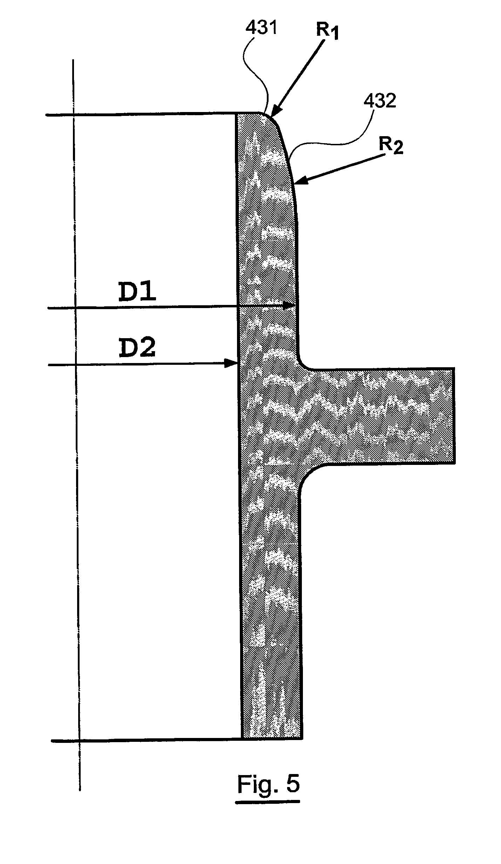

Selon le présent mode de réalisation, la forme galbée 43 est définie en coupe longitudinale, tel qu'illustré par la figure 5, par deux arcs de cercles successifs : un arc de cercle dit proximal 431 dont le rayon de courbure R1 est d'environ 1 mm, et un arc dit distal 432 dont le rayon de courbure R2 est d'environ 20 mm.

On notre qu'une telle pièce est réalisée en acier.

A titre indicatif, la forme galbée 43 présente les diamètres suivants :
- D1 = 24,45 mm, avec une tolérance maxi égale à 0 et une tolérance mini de - 0,2 mm ;
- D2 = 18 mm, avec une tolérance maxi de 0,4 mm et une tolérance mini égale à 0.

En outre, la forme galbée 43 se prolonge en direction de l'élément périphérique 42 par une portion cylindrique présentant une épaisseur e égale à 7 mm.

Selon une variante envisageable, la pièce de positionnement 4 est réalisée sous forme d'un plot de filtration (non représenté), le corps 41 étant entouré d'une douille, un matériau élastique tel que le caoutchouc étant intercalé entre le corps de la pièce et la douille.

On note que, dans ce cas (ou dans d'autres), l'élément périphérique peut prendre place sur la paroi externe de la coquille supérieure, étant alors soudée sur celle-ci.

## Revendications

1. Pièce de positionnement (4) destinée à être portée par un berceau (1) et à être engagée dans un évidement (51) d'une caisse (5) de véhicule automobile, du type présentant un corps (41) formant entretoise entre deux coquilles (11),(12) dudit berceau, ledit corps (41) présentant au moins un élément périphérique (42) formant une surface d'appui avec une paroi d'une coquille (11) du berceau destinée à prendre place au voisinage de ladite caisse (5), ladite pièce de positionnement (4) comprenant une portion à section décroissante à son extrémité destinée à être engagée dans ledit évidement (51) de ladite caisse (5), **caractérisée en ce que** ladite portion présente, selon une coupe longitudinale, une forme galbée susceptible d'être réalisée par fluage de matière, ledit élément périphérique étant également obtenu par fluage de matière, ladite forme galbée (43) étant définie, en coupe longitudinale, par au moins deux arcs de cercle, l'un dit proximal (431) au voisinage de ladite extrémité destinée à être engagée dans ledit évidement (51) de ladite caisse (5), l'autre dit distal (432) dans le prolongement dudit arc proximal et s'étendant vers ledit élément périphérique (42).

2. Pièce de positionnement (4) selon la revendication 1, **caractérisée en ce que** le rayon de courbure dudit arc distal est compris entre 75 % et 100 % du diamètre le plus grand de ladite portion.

3. Pièce de positionnement (4) selon l'une des revendications 1 et 2, **caractérisée en ce que** ledit arc proximal (431) présente un rayon de courbure compris entre environ 1 mm et environ 4 mm, ledit arc distal (432) présentant un rayon de courbure compris entre environ 15 mm et environ 25 mm.

4. Pièce de positionnement (4) selon la revendication 3, **caractérisée en ce que** ledit arc proximal (431) présente un rayon de courbure d'environ 1 mm, ledit arc distal (432) présentant un rayon de courbure d'environ 20 mm.

5. Pièce de positionnement (4) selon l'une quelconque des revendications 1 à 4, **caractérisée en ce qu'**elle est réalisée en acier.

6. Pièce de positionnement selon (4) l'une quelconque des revendications 1 à 5, **caractérisée en ce que** ladite portion se prolonge, en direction dudit élément périphérique (42) par une partie cylindrique (44) présentant une épaisseur d'environ 7 mm.

7. Pièce de positionnement (4) selon l'une quelconque des revendications 1 à 6, **caractérisée en ce que** ledit corps (41) formant entretoise est inséré dans une douille, un matériau élastique étant prévu entre ledit corps (41) et ladite douille de façon que ladite pièce forme un plot de filtration.

8. Berceau (1) comprenant au moins deux coquilles (11), (12) entre lesquelles s'étend au moins partiellement une pièce de positionnement (4) selon l'une quelconque des revendications 1 à 7.

9. Véhicule automobile équipé d'un berceau selon la revendication 8.

## Claims

1. Positioning part (4) designed to be carried by a cradle (1) and to be engaged in a recess (51) of a motor vehicle body shell, of the type having a body (41) forming a spacer between two shells (11), (12) of the said cradle, the said body (41) having at least one peripheral element (41) forming a bearing surface with a wall of one shell (11) of the cradle designed to be positioned in the vicinity of the said body shell (5), the said positioning part (4) comprising a portion with a decreasing section at its end designed to be engaged in the said recess (51) of the said body shell (5), **characterized in that** the said portion has, in a longitudinal section, a curved shape capable of being produced by material creep, the said peripheral element also being obtained by material creep, the said curved shape (43) being defined, in longitudinal section, by at least two arcs of a circle, one called proximal (431) in the vicinity of the said end designed to be engaged in the said recess (51) of the said body shell (5), the other called distal (432) in the extension of the said proximal arc and extending towards the said peripheral element (42).

2. Positioning part (4) according to Claim 1, **characterized in that** the radius of curvature of the said distal arc is between 75% and 100% of the largest diameter of the said portion.

3. Positioning part (4) according to one of Claims 1 and 2, **characterized in that** the said proximal arc (431) has a radius of curvature of between approximately 1 mm and approximately 4 mm, the said distal arc (432) having a radius of curvature of between approximately 15 mm and approximately 25 mm.

4. Positioning part (4) according to Claim 3, **characterized in that** the said proximal arc (431) has a radius of curvature of approximately 1 mm, the said distal arc (432) having a radius of curvature of approximately 20 mm.

5. Positioning part (4) according to any one of Claims 1 to 4, **characterized in that** it is made of steel.

6. Positioning part (4) according to any one of Claims 1 to 5, **characterized in that** the said portion is extended, in the direction of the said peripheral element (42) by a cylindrical portion (44) having a thickness of approximately 7 mm.

7. Positioning part (4) according to any one of Claims 1 to 6, **characterized in that** the said body (41) forming a spacer is inserted into a bush, an elastic material being provided between the said body (41) and the said bush so that the said part forms a filtration block.

8. Cradle (1) comprising at least two shells (11), (12) between which extends at least partially a positioning part (4) according to any one of Claims 1 to 7.

9. Motor vehicle fitted with a cradle according to Claim 8.

## Patentansprüche

1. Positionierbauteil (4), das dazu bestimmt ist, von einer Halterung (1) getragen und in eine Aussparung (51) einer Karosserie (5) eines Kraftfahrzeugs eingefügt zu werden, von der Art mit einem Körper (41), der einen Abstandshalter zwischen zwei Schalen (11), (12) der Halterung bildet, wobei der Körper (41) mindestens ein Umfangselement (42) aufweist, das eine Auflagefläche mit einer Wand einer Schale (11) der Halterung bildet, die dazu bestimmt ist, in der Nähe der Karosserie (5) eingesetzt zu werden, wobei das Positionierbauteil (4) an seinem Ende, das dazu bestimmt ist, in die Aussparung (51) der Karosserie (5) eingeführt zu werden, einen Abschnitt mit abnehmendem Querschnitt enthält, **dadurch gekennzeichnet, dass** der Abschnitt gemäß einem Längsschnitt eine gerundete Form hat, die durch plastische Materialverformung hergestellt werden kann, wobei das Umfangselement ebenfalls durch plastische Materialverformung erhalten wird, wobei die abgerundete Form (43) im Längsschnitt durch mindestens zwei Kreisbögen definiert wird, der eine proximal (431) in der Nähe des Endes, das dazu bestimmt ist, in die Aussparung (51) der Karosserie (5) eingefügt zu werden, der andere distal (432) in der Verlängerung des proximalen Bogens und sich zum Umfangselement (42) erstreckend.

2. Positionierbauteil (4) nach Anspruch 1, **dadurch gekennzeichnet, dass** der Krümmungsradius des distalen Bogens zwischen 75 % und 100 % des größten Durchmessers des Abschnitts liegt.

3. Positionierbauteil (4) nach einem der Ansprüche 1 und 2, **dadurch gekennzeichnet, dass** der proximale Bogen (431) einen Krümmungsradius zwischen etwa 1 mm und etwa 4 mm hat, während der distale Bogen (432) einen Krümmungsradius zwischen etwa 15 mm und etwa 25 mm hat.

4. Positionierbauteil (4) nach Anspruch 3, **dadurch gekennzeichnet, dass** der proximale Bogen (431) einen Krümmungsradius von etwa 1 mm hat, während der distale Bogen (432) einen Krümmungsradius von etwa 20 mm hat.

5. Positionierbauteil (4) nach einem der Ansprüche 1 bis 4, **dadurch gekennzeichnet, dass** es aus Stahl hergestellt ist.

6. Positionierbauteil (4) nach einem der Ansprüche 1 bis 5, **dadurch gekennzeichnet, dass** der Abschnitt sich in Richtung des Umfangselements (42) durch einen zylindrischen Bereich (44) verlängert, der eine Dicke von etwa 7 mm hat.

7. Positionierbauteil (4) nach einem der Ansprüche 1 bis 6, **dadurch gekennzeichnet, dass** der einen Abstandshalter bildende Körper (41) in eine Hülse eingefügt wird, wobei ein elastischer Werkstoff zwischen dem Körper (41) und der Hülse vorgesehen ist, damit das Bauteil einen Filterblock bildet.

8. Halterung (1), die mindestens zwei Schalen (11), (12) aufweist, zwischen denen sich zumindest teilweise ein Positionierbauteil (4) nach einem der Ansprüche 1 bis 7 erstreckt.

9. Kraftfahrzeug, das mit einer Halterung nach Anspruch 8 ausgestattet ist.
